(19) Europäisches Patentamt / European Patent Office / Office européen des brevets

(11) **EP 4 280 789 A1**

(12) **EUROPEAN PATENT APPLICATION**
published in accordance with Art. 153(4) EPC

(43) Date of publication:
**22.11.2023 Bulletin 2023/47**

(21) Application number: **21929588.8**

(22) Date of filing: **11.03.2021**

(51) International Patent Classification (IPC):
**H04W 74/08** (2009.01)   **H04W 72/04** (2023.01)

(52) Cooperative Patent Classification (CPC):
**H04W 72/04; H04W 74/08**

(86) International application number:
**PCT/CN2021/080309**

(87) International publication number:
**WO 2022/188110 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZUO, Zhisong**
  **Dongguan, Guangdong 523860 (CN)**
• **HE, Chuanfeng**
  **Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **INFORMATION TRANSMISSION METHOD, ELECTRONIC DEVICE, AND STORAGE MEDIUM**

(57) The present application discloses an information transmission method, comprising: a terminal device determines a transmission parameter of a message (Msg3) according to first indication information, the transmission parameter comprising at least one of a repeat transmission parameter and a frequency hopping manner of a physical uplink shared channel (PUSCH) carrying the Msg3. Also disclosed in the present application are another information transmission method, an electronic device, and a storage medium.

A terminal device determines transmission parameters of a message Msg3 according to first indication information, and the transmission parameters includes at least one of a repeated transmission parameter or a frequency hopping manner of a physical uplink shared channel PUSCH in which the message Msg3 is carried ⟋ S201

**FIG. 4**

**Description**

TECHNICAL FIELD

The disclosure relates to the technical field of wireless communication, and particularly to a method for information transmission, an electronic device and a storage medium.

BACKGROUND

In a New Radio (NR) system, a random access process may be restarted due to the limited transmission power of the uplink channel or the like. Therefore, how to improve a success rate of the random access process and reduce the delay of the random access process is a permanent goal.

SUMMARY

The embodiments of the disclosure provide a method for information transmission, an electronic device and a storage medium, which can improve the success rate of the random access process and reduce the delay of the random access process.

A first aspect of the embodiments of the present disclosure provides a method for information transmission. The method includes the following operation. A terminal device determines transmission parameters of a message Msg3 message according to first indication information. The transmission parameters include at least one of a repeated transmission parameter or a frequency-hopping manner of a physical uplink shared channel (PUSCH) in which the message Msg3 is carried.

A second aspect of the embodiments of the present disclosure provides a method for information transmission. The method includes the following operation. A network device transmits first indication information for indicating transmission parameters of a message Msg3. The transmission parameters include at least one of a repeated transmission parameter or a frequency-hopping manner of a physical uplink shared channel (PUSCH) in which the message Msg3 is carried.

A third aspect of the embodiments of the present disclosure provides a terminal device including a processing unit. The processing unit is configured to determine transmission parameters of a message Msg3 according to first indication information. The transmission parameters includes at least one of a repeated transmission parameter or a frequency-hopping manner of a physical uplink shared channel (PUSCH) in which the message Msg3 is carried.

A fourth aspect of the embodiments of the present disclosure provides a network device including a transmitting unit. The transmitting unit is configured to transmit first indication information for indicating transmission parameters of a message Msg3. The transmission parameters include at least one of a repeated transmission parameter or a frequency-hopping manner of a physical uplink shared channel (PUSCH) in which the message Msg3 is carried.

A fifth aspect of the embodiments of the present disclosure provides a terminal device including a processor and a memory for storing a computer program capable of running on the processor. The processor is configured to perform the operations of the method for information transmission performed by the terminal device when running the computer program.

A sixth aspect of the embodiments of the present disclosure provides a network device including a processor and a memory for storing a computer program capable of running on the processor. The processor is configured to perform the operations of the method for information transmission performed by the network device when running the computer program.

A seventh aspect of the embodiments of the present disclosure provides a chip including a processor. The processor is configured to call and run a computer program from a memory, to cause a device on which the chip is installed to perform the method for information transmission performed by the terminal device.

An eighth aspect of the embodiments of the present disclosure provides a chip including a processor. The processor is configured to call and run a computer program from a memory, to cause a device on which the chip is installed to perform the method for information transmission performed by the network device.

A ninth aspect of the embodiments of the present disclosure provides a storage medium having stored an executable program that, when executed by a processor, implements the method for information transmission performed by the terminal device.

A tenth aspect of the embodiments of the present disclosure provides a storage medium having stored an executable program that, when executed by a processor, implements the method for information transmission performed by the network device.

An eleventh aspect of the embodiments of the present disclosure provides a computer program product including computer program instructions, which cause a computer to perform the method for information transmission performed by the terminal device.

An twelfth aspect of the embodiments of the present disclosure provides a computer program product including computer program instructions, which cause a computer to perform the method for information transmission performed by the network device.

A thirteenth aspect of the embodiments of the present disclosure provides a computer program which causes a computer to perform the method for information transmission performed by the terminal device.

A fourteenth aspect of the embodiments of the present disclosure provides a computer program which causes a computer to perform the method for information transmission performed by the network device.

BRIEF DESCRIPTION OF THE DRAWINGS

FIG. 1 is a schematic diagram of an initial random access process provided by an embodiment of the present disclosure;

FIG. 2 is a schematic diagram of a frequency-hopping transmission within a slot provided by an embodiment of the present disclosure;

FIG. 3 is a schematic diagram of a composition structure of a communication system provided by an embodiment of the present disclosure;

FIG. 4 is a schematic diagram of an alternative processing flow of the method for information transmission provided by an embodiment of the present disclosure;

FIG. 5 is a schematic diagram of a MAC CE for determining a repeated transmission parameter provided by an embodiment of the present disclosure;

FIG. 6 is a schematic optional diagram of a frequency-hopping pattern provided by an embodiment of the present disclosure;

FIG. 7 is another schematic optional diagram of a frequency-hopping pattern provided by an embodiment of the present disclosure;

FIG. 8 is another schematic optional diagram of a frequency-hopping pattern provided by an embodiment of the present disclosure;

FIG. 9 is another schematic optional diagram of a processing flow of the method for information transmission provided by an embodiment of the present disclosure;

FIG. 10 is a schematic optional diagram of a detailed processing flow of the method for information transmission provided by an embodiment of the present disclosure;

FIG. 11 is a schematic optional diagram of a composition structure of a terminal device provided by an embodiment of the present disclosure.

FIG. 12 is a schematic optional diagram of a composition structure of a network device provided by an embodiment of the present disclosure.

FIG. 13 is a schematic diagram of a hardware composition structure of an electronic device provided by an embodiment of the present disclosure.

DETAILED DESCRIPTION

In order to provide a more detailed understanding of the features and technical content of the embodiments of the present disclosure, the implementation of the embodiments of the present disclosure will be described in detail below in conjunction with the accompanying drawings, which are provided for illustration only, and are not intended to limit the embodiments of the present disclosure.

The relevant contents are described briefly before describing the embodiments of the present disclosure.

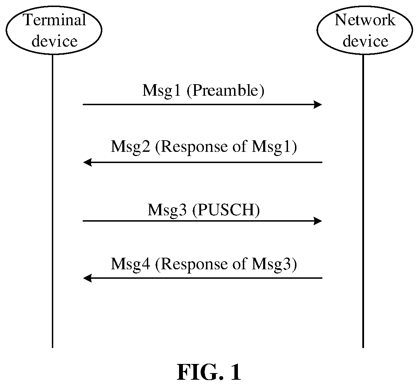

In a New Radio (NR) system, a schematic diagram of an initial random access process is shown in FIG. 1. The random access process may include the following operations.

At operation 1, a terminal device transmits a Preamble to a network device through a message 1 (Msg1).

At operation 2, upon the network device detects the Preamble, the network device transmits a Random Access Response (RAR) to the terminal device through a message Msg2. The RAR is scrambled by a Random Access-Radio Network Temporary Identifier (RA-RNTI) of an UpLink (UL) authorization indicated, and the RAR includes a Random Access Preamble ID (RAPID).

At operation 3, the terminal device having the RAPID transmits a message Msg3 to the network device in the UL authorization indicated by the network device. A plurality of terminal devices transmit the Msg3 using a same resource and a same Demodulation Reference Signal (DMRS) in the UL authorization indicated in the RAR.

At operation 4, the network device transmits a message Msg4 to the terminal device.

In some embodiments, the network device parses received composite channels transmitted by all the terminal devices, to obtain information of one terminal device, such as an identification code and a Timing Advance (TA) of the terminal device. The network device transmits feedback information, i.e., Msg4 to the one terminal device. A conflict resolution can be completed through the Msg4, and then the random access process can be ended.

In the four operations of the random access process described in FIG. 1, the terminal device may have a limited coverage when transmitting or receiving messages. In some embodiments, the coverage performance of the terminal device in transmitting or receiving messages may be improved by data channel aggregation. For example, multi-slot data transmission of the PUSCH and PDSCH are aggregated through an uplink or downlink aggregation factor. The coverage of a single transmission can be improved through the multi-slot transmission. In other embodiments, the coverage performance of the terminal device in transmitting or receiving messages can also be improved by a data frequency hopping. A diversity gain can be obtained through a frequency hopping transmission in the NR system, especially for the uplink channel, because of a small transmission bandwidth and the insufficient frequency diversity, a frequency hopping technology is often used to obtain an extra frequency diversity gain. An uplink frequency hopping is widely used in an Orthogonal Frequency Division Multiplexing (OFDM) system, including a LTE system. In the NR system, due to the introduction of a Bandwidth part (BWP), any uplink signal of the terminal device should be limited in an uplink BWP activated by the terminal device. Therefore, the NR system can keep frequency hopping resources within the BWP range and obtain sufficient frequency hopping gains through a mapping formula and a small number of scheduling restrictions. One scheduling transmission of the NR system only supports two hops, which can only transmit at two different frequency domain positions.

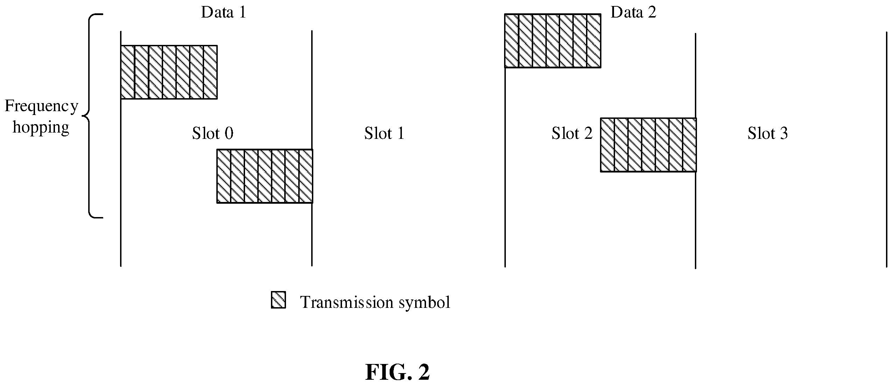

The frequency hopping transmission supported by the NR system includes an inter-slot frequency hopping transmission and an intra-slot frequency hopping transmission. The intra-slot frequency hopping may indicate that there are transmissions of at least two hops in one slot, and the inter-slot frequency hopping may indicate that there are transmissions of at least two hops in two slots, and there is a transmission of at least one hop in each slot. A schematic diagram of an intra-slot frequency hopping transmission may be shown in FIG. 2. Two transmissions of data are performed in different frequency ranges of a same slot. For example, Data 1 is transmitted at two different frequencies of a slot1, and Data 2 is transmitted at two different frequencies of a slot2.

In the NR system, the repeated transmission in the slot can also be combined with the frequency hopping transmission. A schematic diagram of combination of the repeated transmission and the frequency hopping transmission of the slot is shown in FIG. 2. The repeated transmission of data is performed in slot1, slot2, slot2 and slot3, and the inter-slot frequency hopping transmission is performed among slot1, slot2, slot2 and slot3. That is, different frequency ranges are used in adjacent slots when the data is repeatedly transmitted in the two adjacent slots.

In related arts, during the random access process, the power of an uplink channel (such as a PUSCH in which Msg1 or Msg3 are carried) in initial random access is limited, this is referred to as a coverage bottleneck in some scenarios, and affects the success rate and robustness of the initial random access. Moreover, there is no timing mechanism for the repeated transmission at present for the channel for transmitting the Msg3 with limited coverage, which easily results in restart access of the random access and increases the delay and power consumption of the initial random access of the terminal device. At present, the terminal device can only be configured to perform the intra-slot frequency hopping transmission. If the repeated transmission of the Msg3 is introduced in the initial random access process, reasonable multiplexing and coexistence of the repeated transmission of the Msg3 and the non-repeated transmission of the Msg3 of other terminal devices in a frequency domain has low efficiency.

The technical solution of the embodiments of the present disclosure may be applied to various communication systems, such as: a global system of mobile communication (GSM) system, a code division multiple access (CDMA) system, a wideband code division multiple access (WCDMA) system, a general packet radio service (GPRS) system, an LTE system, an LTE frequency division duplex (FDD) system, an LTE time division duplex (TDD) system, an advanced long term evolution (LTE-A) system, an NR system, an evolution system of the NR system, an LTE-based access to unlicensed spectrum (LTE-U) system, an NR-based access to unlicensed spectrum (NR-U) system, a universal mobile telecommunications system (UMTS), a worldwide interoperability for microwave access (WiMAX) communication system, a wireless local area networks (WLAN), a wireless fidelity (WiFi), a next generation communication system or other communication systems, etc.

The system architecture and service scenario described in the embodiments of the present disclosure are used to illustrate the technical solution of the embodiments of the present disclosure more clearly, and do not constitute a limitation to the technical solution provided by the embodiments of the present disclosure. It is known to those of ordinary skill in the art that the technical solution provided by the embodiments of the present disclosure is equally applicable to similar technical problems as the evolution of the network architecture and the emergence of new service scenarios.

The network device in the embodiments of the present disclosure may be a common base station (such as a NodeB, an eNB or a gNB), a new radio controller (NR controller), a centralized unit, a new radio base station, a radio remote module, a micro base station, a relay, a distributed unit, a transmission reception point (TRP), a transmission point (TP) or any other device. The specific technology and the specific device form adopted by the network device are not limited by the embodiments of the present disclosure. For ease of description, the above-mentioned devices for providing a wireless communication function to the terminal device are collectively referred to as a network device in all the embodiments of the present disclosure.

In the embodiments of the present disclosure, a terminal device may be any terminal. For example, the terminal device may be a user device of machine type communication. That is, the terminal device may also be referred to as user equipment (UE), a mobile station (MS), a mobile terminal (MS), a terminal, etc. The terminal device may communicate with one or more core networks via a radio access network (RAN). For example, the terminal device may be a mobile phone (or "cellular" phone), a computer with a mobile terminal, etc. For example, the terminal device may also be a portable, pocket-sized, hand-held, computer-built or vehicle-mounted mobile device that exchanges language and/or data with the radio access network, which is not limited by the embodiments of the present disclosure.

Alternatively, the network device and the terminal device can be deployed on land, including indoor or outdoor, hand-held or vehicle-mounted. The network device and the terminal device can also be deployed on a water surface. The network device and the terminal device can also be deployed on airplanes, balloons and artificial satellites in the air. The application scenarios of the network device and the terminal device are not limited by the embodiments of the present disclosure.

Alternatively, a communication between the network device and the terminal device or between the terminal devices may be performed through a licensed spectrum, an unlicensed spectrum, or both the licensed spectrum and the unlicensed spectrum. The communication between the network device and the terminal device or between the terminal devices may be performed through a frequency spectrum below 7 gigahertz (GHz), or above 7GHz, and can also be performed through the frequency spectrum below 7GHz and above 7GHz at the same time. The spectrum resources used between the network device and the terminal device are not limited by the embodiments of the present disclosure.

In general, conventional communication systems support a limited number of connections and are easy to implement. However, with the development of the communication technology, mobile communication systems will support not only the conventional communication, but also, for example, a device to device (D2D) communication, a machine to machine (M2M) communication, a machine type communication (MTC), a vehicle to vehicle (V2V) communication, etc. These communication systems may also be applied to the embodiments of the present disclosure.

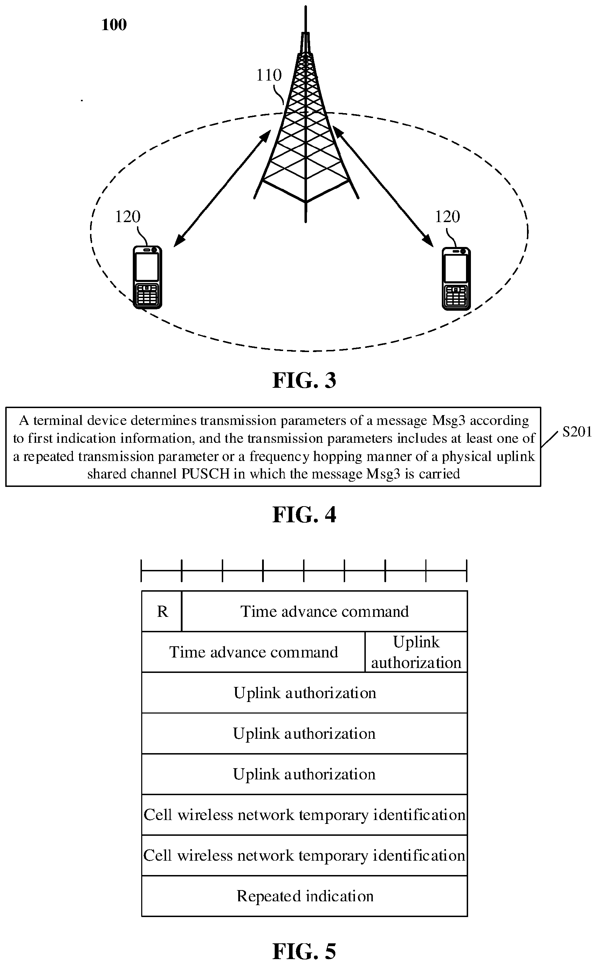

An exemplary communication system 100 to which the embodiments of the present disclosure are applied is illustrated in FIG. 3. The communication system 100 may include a network device 110 which may be a device that communicates with a terminal device 120 (or referred to as a communication terminal, a terminal). The network device 110 may provide communication coverage for a particular geographic area and may communicate with terminal devices within the coverage area. Alternatively, the network device 110 may be a base transceiver station (BTS) in a GSM system or a CDMA system, a base station (NodeB, NB) in a WCDMA system, an evolutional node B (eNB or eNodeB) in an LTE system, or a wireless controller in a cloud radio access network (CRAN). Alternatively, the network device may be a network-side device in a mobile exchange center, a relay station, an access point, a vehicle-mounted device, a wearable device, a hub, a switch, a bridge, a router, a 5G network, or a network device in a future evolutional public land mobile network (PLMN).

The communication system 100 further includes at least one terminal device 120 within the coverage area of the network device 110. The "terminal device" as used herein includes, but is not limited to, being connected via a wire line, such as via a public switched telephone network (PSTN), a digital subscriber line (DSL), a digital cable, a direct cable connection; and/or another data connection/network; and/or via a wireless interface, such as a cellular network, a wireless local area network (WLAN), a digital television network such as a DVB-H network, a satellite network, an AM-FM broadcast transmitter; and/or a device of another terminal device arranged to receive/transmit a communication signal; and/or an internet of things (IoT) device. A terminal device configured to communicate through a wireless interface may be referred to as a "wireless communication terminal," a "wireless terminal," or a "mobile terminal". Examples of the mobile terminal include, but are not limited to, a satellite or a cellular phone; a personal communications system (PCS) terminal that may combine a cellular radio telephone with capabilities of data processing, facsimileing, and data communication; a PDA which may include a radio telephone, a pager, an Internet/Intranet access, a web browser, a notebook, a calendar, and/or a global positioning system (GPS) receiver; and a conventional laptop and/or a handheld receiver or other electronic devices including a radio telephone transceiver. The terminal device may refer to an access terminal, a user equipment (UE), a subscriber unit, a subscriber station, a mobile station, a remote station, a remote terminal, a mobile device, a user terminal, a terminal, a wireless communication device, a user agent, or a user device. The access terminal may be a cellular telephone, a cordless telephone, a session initiation protocol (SIP) telephone, a wireless local loop (WLL) station, a personal digital assistant (PDA), a handheld device having a wireless communication function, a computing device or other processing device connected to a wireless modem, a vehicle-mounted device, a wearable device, a terminal device in a 5G network or a terminal device in a future evolutional PLMN, etc.

Alternatively, a device to device (D2D) communication may be performed between the terminal devices 120.

Alternatively, a 5G system or a 5G network may also be referred to as a new radio (NR) system or an NR network.

FIG. 3 exemplarily illustrates one network device and two terminal devices. Alternatively, the communication system 100 may include multiple network devices, and other numbers of terminal devices may be included within the coverage area of each network device, which is not limited by the embodiments of the present disclosure.

Alternatively, the communication system 100 may also include other network entities, such as a network controller, a mobility management entity, etc., which are not limited by the embodiments of the present disclosure.

It should be understood that a device having a communication function in a network/system in the embodiments of the present disclosure may be referred to as a communication device. Taking the communication system 100 illustrated in FIG. 3 as an example, the communication device may include a network device 110 and a terminal device 120 having a communication function, and the network device 110 and the terminal device 120 may be specific devices described above and will not be described here. The communication device may also include other devices in the communication system 100, such as a network controller, a mobility management entity and other network entities, which are not limited by the embodiments of the present disclosure.

As illustrated in FIG. 4, an embodiment of the present disclosure provides an optional process flow of the method for information transmission, which including the following operations.

At S201, a terminal device determines transmission parameters of a message Msg3 according to first indication information, and the transmission parameters includes at least one of a repeated transmission parameter or a frequency hopping manner of a physical uplink shared channel PUSCH in which the message Msg3 is carried.

In some embodiments, the method for information transmission provided by the embodiment of the present disclose may further include an operation that the terminal device receives the first indication information. The first indication information can be carried in a RAR message, which is a message transmitted by a network device through a message Msg2 during the random access process.

In some embodiments, the repeated transmission parameter includes the number of time domain units for repeated transmission. The time domain unit for repeated transmission may be a time domain unit for repeatedly transmitting a PUSCH carrying the Msg3 . The time domain unit may include any one of a frame, a subframe, a slot, a symbol or a symbol group. For example, the time domain unit is 1 slot, or 2 slots, or 4 slots, or 8 slots, or 16 slots, or 32 slots, etc.

In some embodiments, the terminal device determines the transmission parameters of the Msg3 in at least three manners described below.

In a first manner, the first indication information indicates the repeated transmission parameter and a frequency hopping pattern corresponding to the frequency hopping manner.

In some embodiments, the repeated transmission parameter is determined by a fourth information field in a RAR message, and the fourth information field is different from an information field for indicating the frequency hopping manner. Alternatively, the repeated transmission parameter is determined by a medium access control (MAC) control unit (MAC CE). Alternatively, the repeated transmission parameter is determined by downlink control information (DCI). That is, the first indication information may be carried in the RAR message, or the first indication information may be carried in the MAC CE, or the first indication information may be carried in the DCI. The RAR message is a message transmitted by the network device through Msg2 during the random access process, the DCI can also be DCI corresponding to Msg2 during the random access process, and the MAC CE can also be an MAC CE corresponding to Msg2 during the random access process.

If the repeated transmission parameter is determined by the MAC CE, a schematic diagram of the MAC CE for determining the repeated transmission parameter is shown in FIG. 5, the repeated transmission parameter may be indicated by an information field of repetition indication or by a reserved information field (R).

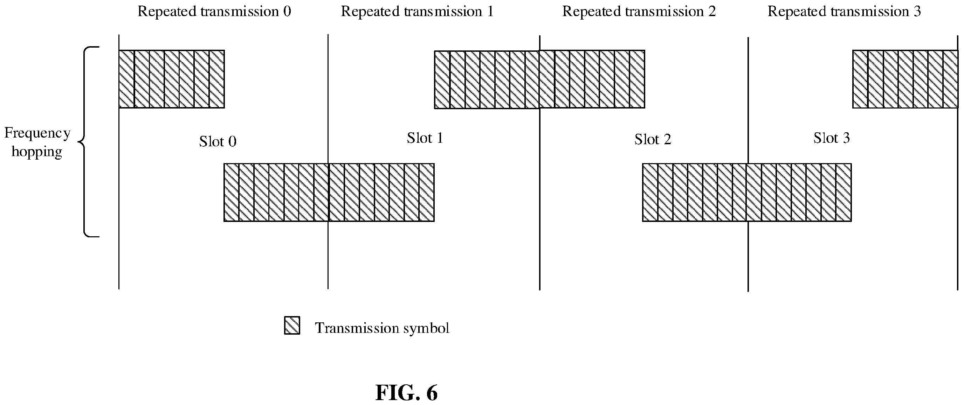

In some embodiments, the frequency hopping pattern may be that a first-hop transmission in a first slot has the same frequency domain position as a second-hop transmission in a second slot, the second slot is a time slot adjacent to the first time slot and the second slot is located previously the first slot, and each of the first slot and the second slot has two-hop transmissions. For example, an optional schematic diagram of the frequency hopping pattern is shown in FIG. 6, a slot0 and a slot1 are adjacent, and slot0 is located previously slot1. The first-hop transmission in the slot1 has the same frequency domain position as the second-hop transmission in slot0, data transmitted by slot0 is a 0th repeated transmission (Repetition0), and data transmitted by the slot1 is a first repeated transmission (Repetition1).

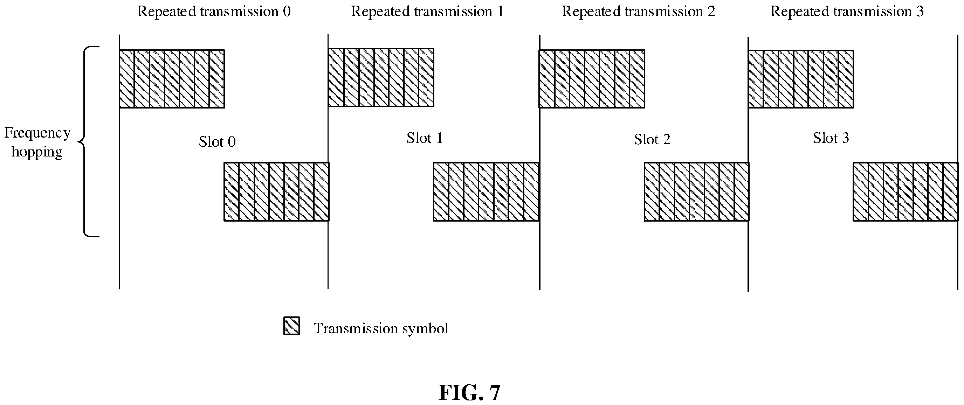

In other embodiments, the frequency hopping pattern may be that a first-hop transmission in a first slot has the same frequency domain position as a first-hop transmission in a second slot, the second slot is a time slot adjacent to the first time slot, and the second slot is located previously the first slot, and each of the first slot and the second slot has two-hop transmissions. For example, another optional schematic diagram of the frequency hopping pattern is shown in FIG. 7, slot0 and slot1 are adjacent, and slot0 is located previously slot1, the first-hop transmission in slot1 has the same frequency domain position as the first-hop transmission in slot0, data transmitted by slot0 is a 0th repeated transmission (Repetition0), and data transmitted by slot1 is a first repeated transmission (Repetition 1).

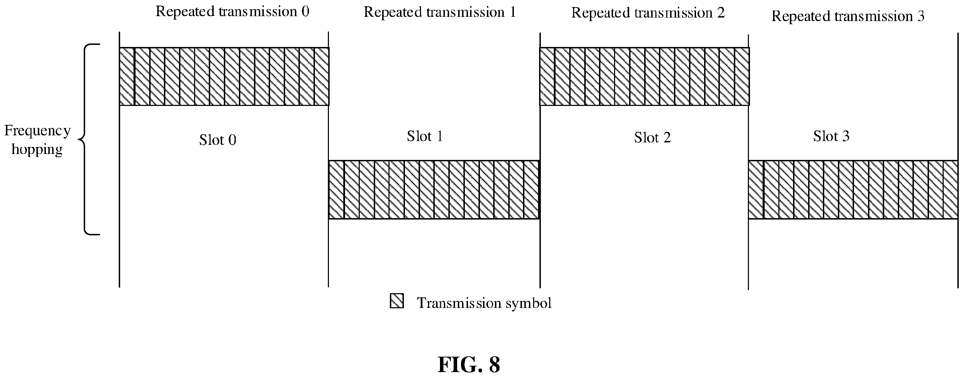

In still other embodiments, another alternative schematic diagram of the frequency hopping pattern is shown in FIG. 8, each slot includes one transmission, and two adjacent repeated transmissions have different frequencies. Data transmitted by slot0 is a 0th repeated transmission (Repetition0), and data transmitted by slot1 is a first repeated transmission (Repetition1). The data is transmitted in slot0 and slot1 by frequency hopping, and frequencies of the repeated transmission of the data in slot0 and slot1 are different.

In some embodiments, the frequency hopping pattern is determined by a frequency hopping indication field in a RAR message. The RAR message is a message transmitted by the network device through Msg2 during the random access process. The format of the RAR message may be shown in Table 1 below, and the frequency hopping indication field includes 1 bit for indicating the frequency hopping pattern.

Table 1: RAR message

| RAR information domain | Number of bits |
|---|---|
| a. frequency hopping indication | b. 1 |
| c. PUSCH frequency domain resources | d. 14 licensed spectrum<br>e. 12 unlicensed spectrum |
| f. PUSCH time domain resource | g. 4 |
| h. transmission level (MCS) | i. 4 |
| j. power control command | k. 3 |
| l. CSI request | m. 1 |

In a second manner, the first indication information indicates the repeated transmission parameter and whether to perform a frequency hopping transmission or not.

In some embodiments, the repeated transmission parameter is determined by a fourth information field in a RAR message, and the fourth information field is different from an information field for indicating the frequency hopping manner. Alternatively, the repeated transmission parameter is determined by a medium access control (MAC) control unit (MAC CE). Alternatively, the repeated transmission parameter is determined by downlink control information (DCI). That is, the first indication information may be carried in the RAR message, or the first indication information may be carried in the MAC CE, or the first indication information may be carried in the DCI. The RAR message is a message transmitted by the network device through Msg2 during random access process, the DCI can also be DCI corresponding to Msg2 during the random access process, and the MAC CE can also be an MAC CE corresponding to Msg2 during the random access process.

If the repeated transmission parameter is determined by the MAC CE, a schematic diagram of the MAC CE for determining the repeated transmission parameter is shown in FIG. 5, the repeated transmission parameter may be indicated by an information field of repetition indication or by a reserved information field (R).

In some embodiments, whether or not to perform the frequency hopping transmission is determined by a frequency hopping indication field in a RAR message. The RAR message is a message transmitted by the network device through Msg2 during the random access process. The format of the RAR message may be as shown in the above Table 1 and the frequency hopping indication field includes 1 bit for indicating whether a PUSCH carrying the Msg3 is transmitted by frequency hopping.

In some embodiments, if the first indication information indicates the PUSCH carrying the Msg3 is transmitted by frequency hopping, the terminal device further determines a frequency hopping manner, which includes intra-slot frequency hopping or inter-slot frequency hopping. That is, the terminal device determines that the frequency hopping manner is the intra-slot frequency hopping or the inter-slot frequency hopping. In practice, the frequency hopping manner is determined by a second information field in the RAR message, and the second information field is different from the frequency hopping indication field. Alternatively, the frequency hopping manner is determined by an MAC CE. Alternatively, the frequency hopping manner is determined by DCI. The RAR message is a message transmitted by the network device through Msg2 during the random access process, the DCI can also be DCI corresponding to Msg2 during the random access process, and the MAC CE can also be an MAC CE corresponding to Msg2 during the random access process. A schematic diagram of DCI for indicating the frequency hopping manner may be shown in Table 2, the DCI may be existing DCI in the prior art, and the frequency hopping manner is indicated by a reserved information field in the DCI.

Table 2: Format of DCI

| Information field | Definition |
|---|---|
| -Frequency domain resource assignment | $\left\lceil \log_2(N_{RB}^{DL,BWP}(N_{RB}^{DL,BWP}+1)/2) \right\rceil$ bits  $N_{RB}^{DL,BWP}$ is equal to the size of CORESET 0, if the CORESET 0 has a high-level configuration; $N_{RB}^{DL,BWP}$ is equal to an initial downlink BWP if the CORESET 0 is not configured |
| -Time domain resource assignment | -4 bits |
| - VRB-to-PRB mapping | -1 bit, indicating discrete or continuous PRB mapping |
| -Modulation and coding scheme | -5 bits modulation order |
| -TB scaling | -2 bits data block scaling factor |
| -LSBs of SFN | -2 bits for MsgB-RNTI and RA-RNTI under shared spectrum. 0 bit, for other situations |
| Reserved information field (R) | indicating a frequency hopping manner |

In a third manner, the first indication information indicates the repeated transmission parameter and whether to perform intra-slot frequency hopping or not.

In some embodiments, the repeated transmission parameter is determined by a fourth information field in a RAR message, and the fourth information field is different from an information field for indicating the frequency hopping manner. Alternatively, the repeated transmission parameter is determined by a medium access control (MAC) control unit (MAC CE). Alternatively, the repeated transmission parameter is determined by downlink control information (DCI). That is, the first indication information may be carried in the RAR message, or the first indication information may be carried in the MAC CE, or the first indication information may be carried in the DCI. The RAR message is a message transmitted by the network device through Msg2 during random access process, the DCI can also be DCI corresponding to Msg2 during the random access process, and the MAC CE can also be an MAC CE corresponding to Msg2 during the random access process.

If the repeated transmission parameter is determined by the MAC CE, a schematic diagram of the MAC CE for determining the repeated transmission parameter is shown in FIG. 5, the repeated transmission parameter may be indicated by an information field of repetition indication or by a reserved information field (R).

In some embodiments, whether to perform the intra-slot frequency hopping is determined by a frequency hopping indication field in the RAR message. The RAR message is a message transmitted by the network device through Msg2 during the random access process. The format of the RAR message may be as shown in the above Table 1, and the frequency hopping indication field includes 1 bit for indicating whether a PUSCH carrying the Msg3 is transmitted by the intra-slot frequency hopping.

In some embodiments, the terminal device determines whether to perform an inter-slot frequency hopping in response to the first indication information indicating not to perform the intra-slot frequency hopping. In practice, whether to perform the inter-slot frequency hopping is determined by a third information field in the RAR message, and the third information field is different from the frequency hopping indication field. Alternatively, whether to perform the inter-slot frequency hopping is determined by an MAC CE. Alternatively, whether to perform the inter-slot frequency hopping is determined by DCI. The RAR message is a message transmitted by the network device through Msg2 during the random access process, the DCI can also be DCI corresponding to Msg2 during the random access process, and the MAC CE can also be an MAC CE corresponding to Msg2 during the random access process.

In an embodiment, if the first indication information indicates to perform the intra-slot frequency hopping, the terminal device ignores the indication of whether to perform the inter-slot frequency hopping. That is, if the first indication information indicates to perform the intra-slot frequency hopping, the terminal device transmits a PUSCH carrying the Msg3 by the intra-slot frequency hopping. If the first indication information indicates not to perform the intra-slot frequency hopping, the terminal device further determines parameters of the inter-slot frequency hopping.

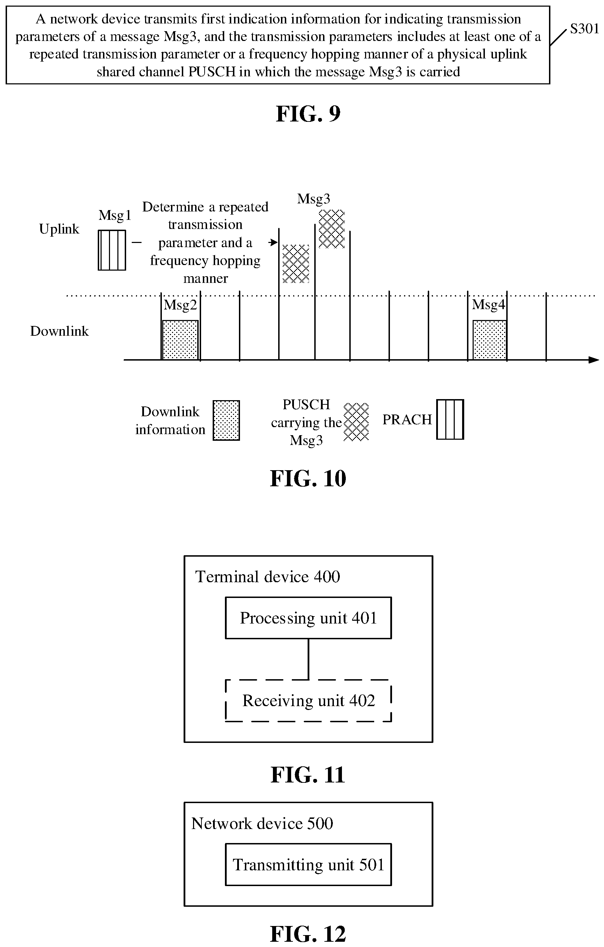

Another optional schematic diagram of a frequency hopping pattern provided by an embodiment of the present disclosure is shown in FIG. 9, including the following operations.

At S301, a network device transmits first indication information for indicating transmission parameters of a message Msg3, and the transmission parameters includes at least one of a repeated transmission parameter or a frequency hopping manner of a physical uplink shared channel PUSCH in which the message Msg3 is carried.

In some embodiments, the repeated transmission parameter includes the number of time domain units for repeated transmission. The time domain unit for repeated transmission may be a time domain unit for repeatedly transmitting a PUSCH carrying the Msg3. The time domain unit may include any one of a frame, a subframe, a slot, a symbol or a symbol group. For example, the time domain unit is 1 slot, or 2 slots, or 4 slots, or 8 slots, or 16 slots, or 32 slots, etc.

In some embodiments, the network device indicates the transmission parameters of the Msg3 in at least three manners described separately below.

In a first manner, the first indication information indicates the repeated transmission parameter and a frequency hopping pattern corresponding to the frequency hopping manner.

In some embodiments, the repeated transmission parameter is determined by a fourth information field in a RAR message, and the fourth information field is different from an information field for indicating the frequency hopping manner. Alternatively, the repeated transmission parameter is determined by a medium access control (MAC) control unit (MAC CE). Alternatively, the repeated transmission parameter is determined by downlink control information (DCI). That is, the first indication information may be carried in the RAR message, or the first indication information may be carried in the MAC CE, or the first indication information may be carried in the DCI. The RAR message is a message transmitted by the network device through Msg2 during the random access process, the DCI can also be DCI corresponding to Msg2 during the random access process, and the MAC CE can also be an MAC CE corresponding to Msg2 during the random access process.

If the repeated transmission parameter is determined by the MAC CE, a schematic diagram of the MAC CE for determining the repeated transmission parameter is shown in FIG. 5, the repeated transmission parameter may be indicated by an information field of repetition indication or by a reserved information field (R).

In some embodiments, the frequency hopping pattern may be that a first-hop transmission in a first slot has the same frequency domain position as a second-hop transmission in a second slot, the second slot is a time slot adjacent to the first time slot and the second slot is located previously the first slot, and each of the first slot and the second slot has two-hop transmissions. For example, an optional schematic diagram of the frequency hopping pattern is shown in FIG. 6, a slot0 and a slot1 are adjacent, and slot0 is located previously slot1. The first-hop transmission in the slot1 has the same frequency domain position as the second-hop transmission in slot0, data transmitted by slot0 is a 0th repeated transmission (Repetition0), and data transmitted by the slot1 is a first repeated transmission (Repetition 1).

In other embodiments, the frequency hopping pattern may be that a first-hop transmission in a first slot has the same frequency domain position as a first-hop transmission in a second slot, the second slot is a time slot adjacent to the first time slot, and the second slot is located previously the first slot, and each of the first slot and the second slot has two-hop transmissions. For example, another optional schematic diagram of the frequency hopping pattern is shown in FIG. 7, slot0 and slot1 are adjacent, and slot0 is located previously slot1, the first-hop transmission in slot1 has the same frequency domain position as the first-hop transmission in slot0, data transmitted by slot0 is a 0th repeated transmission (Repetition0), and data transmitted by slot1 is a first repeated transmission (Repetition1).

In still other embodiments, another alternative schematic diagram of the frequency hopping pattern is shown in FIG. 8, each slot includes one transmission, and two adjacent repeated transmissions have different frequencies. Data transmitted by slot0 is a 0th repeated transmission (Repetition0), and data transmitted by slot1 is a first repeated transmission (Repetition1). The data is transmitted in slot0 and slot1 by frequency hopping, and frequencies of the repeated transmission of the data in slot0 and slot1 are different.

In some embodiments, the frequency hopping pattern is determined by a frequency hopping indication field in the RAR message. The RAR message is a message transmitted by the network device through Msg2 during the random access process. The format of the RAR message may be shown in Table 1 above, and the frequency hopping indication field includes 1 bit for indicating the frequency hopping pattern.

In a second manner, the first indication information indicates the repeated transmission parameter and whether to perform a frequency hopping transmission or not.

In some embodiments, the repeated transmission parameter is determined by a fourth information field in a RAR message, and the fourth information field is different from an information field for indicating the frequency hopping manner. Alternatively, the repeated transmission parameter is determined by a medium access control (MAC) control unit (MAC CE). Alternatively, the repeated transmission parameter is determined by downlink control information (DCI). That is, the first indication information may be carried in the RAR message, or the first indication information may be carried in the MAC CE, or the first indication information may be carried in the DCI. The RAR message is a message transmitted by the network device through Msg2 during random access process, the DCI can also be DCI corresponding to Msg2 during the random access process, and the MAC CE can also be an MAC CE corresponding to Msg2 during the random access process.

If the repeated transmission parameter is determined by the MAC CE, a schematic diagram of the MAC CE for determining the repeated transmission parameter is shown in FIG. 5, the repeated transmission parameter may be indicated by an information field of repetition indication or by a reserved information field (R).

In some embodiments, whether or not to perform the frequency hopping transmission is determined by a frequency hopping indication field in a RAR message. The RAR message is a message transmitted by the network device through Msg2 during the random access process. The format of the RAR message may be as shown in the above Table 1 and the frequency hopping indication field includes 1 bit for indicating whether a PUSCH carrying the Msg3 is transmitted by frequency hopping.

In some embodiments, if the first indication information indicates the PUSCH carrying the Msg3 is transmitted by frequency hopping, the terminal device further determines a frequency hopping manner, which includes intra-slot frequency hopping or inter-slot frequency hopping. That is, the terminal device determines that the frequency hopping manner is the intra-slot frequency hopping or the inter-slot frequency hopping. In practice, the frequency hopping manner is determined by a second information field in the RAR message, and the second information field is different from the frequency hopping indication field. Alternatively, the frequency hopping manner is determined by an MAC CE. Alternatively, the frequency hopping manner is determined by DCI. The RAR message is a message transmitted by the network device through Msg2 during the random access process, the DCI can also be DCI corresponding to Msg2 during the random access process, and the MAC CE can also be an MAC CE corresponding to Msg2 during the random access process. A schematic diagram of DCI for indicating the frequency hopping manner may be shown in Table 2, the DCI may be existing DCI in the prior art, and the frequency hopping manner is indicated by a reserved information field in the DCI.

In a third manner, the first indication information indicates the repeated transmission parameter and whether to perform intra-slot frequency hopping or not.

In some embodiments, the repeated transmission parameter is determined by a fourth information field in a RAR message, and the fourth information field is different from an information field for indicating the frequency hopping manner. Alternatively, the repeated transmission parameter is determined by a medium access control (MAC) control unit (MAC CE). Alternatively, the repeated transmission parameter is determined by downlink control information (DCI). That is, the first indication information may be carried in the RAR message, or the first indication information may be carried in the MAC CE, or the first indication information may be carried in the DCI. The RAR message is a message transmitted by the network device through Msg2 during the random access process, the DCI can also be DCI corresponding to Msg2 during the random access process, and the MAC CE can also be the MAC CE corresponding to Msg2 during the random access process.

If the repeated transmission parameter is determined by the MAC CE, a schematic diagram of the MAC CE for determining the repeated transmission parameter is shown in FIG. 5, the repeated transmission parameter may be indicated by an information field of repetition indication or by a reserved information field (R).

In some embodiments, whether to perform the intra-slot frequency hopping is indicated by a frequency hopping indication field in the RAR message. The RAR message is a message transmitted by the network device through Msg2 during the random access process. The format of the RAR message may be as shown in the above Table 1 and the frequency hopping indication field includes 1 bit for indicating whether a PUSCH carrying the Msg3 is transmitted by the intra-slot frequency hopping.

In some embodiments, the network device may further indicate whether to perform an inter-slot frequency hopping in response to the first indication information indicating not to perform the intra-slot frequency hopping. In practice, whether to perform the inter-slot frequency hopping is determined by a third information field in the RAR message, and the third information field is different from the frequency hopping indication field. Alternatively, whether to perform the inter-slot frequency hopping is determined by an MAC CE. Alternatively, whether to perform the inter-slot frequency hopping is determined by DCI. The RAR message is a message transmitted by the network device through Msg2 during the random access process, the DCI can also be DCI corresponding to Msg2 during the random access process, and the MAC CE can also be an MAC CE corresponding to Msg2 during the random access process.

In an embodiment, if the first indication information indicates to perform the intra-slot frequency hopping, the terminal device ignores the indication of whether to perform the inter-slot frequency hopping. That is, if the first indication information indicates to perform the intra-slot frequency hopping, the terminal device transmits a PUSCH carrying the Msg3 by the intra-slot frequency hopping. If the first indication information indicates not to perform the intra-slot frequency hopping, the terminal device further determines parameters of the inter-slot frequency hopping.

A schematic diagram of a detailed optional process flow of the method for information transmission provided by an embodiment of the present disclosure is shown in FIG. 10. During an random access process, a terminal device transmits a Msg1 to a network device, and the network device transmits a Msg2 to the terminal device after receiving the Msg1. The signaling (such as a MAC CE, a RAR or DCI) in Msg2 indicates to the terminal device, a repeated transmission parameter or a frequency hopping manner of a PUSCH carrying the Msg3. The terminal device transmits a Msg3 according to indication of the network device. The network device transmits a Msg4 to the terminal device after receiving Msg3.

It should be noted that the method for information transmission provided by the above-mentioned embodiments of the present disclosure can be applied to an authorized spectrum or an unauthorized spectrum. A time domain unit for repeated transmission can also be non-slot, and other granularity is used according to the actual resource allocation requirement, such as a time domain repetition unit based on an OFDM symbol or a certain number of OFDM symbol groups.

It should be noted that the method for information transmission provided by the above-mentioned embodiments of the present disclosure can be applied to the random access process, and can also be applied to indicate dynamic parameters in multiple stages during other channel transmission processes.

The method for information transmission provided by the embodiments of the present disclosure specifies that a transmission manner of a PUSCH carrying an Msg3 can be a repeated transmission or a frequency hopping transmission. By performing the frequency hopping transmission and/or the repeated transmission on the PUSCH carrying the Msg3, the coverage performance of the PUSCH transmission carrying the Msg3 can be enhanced, thereby improving a success rate and robustness of random access of a terminal device under limited capacity (such as an increasing coverage, a decreasing antenna gain, a decreasing bandwidth, etc.), and reducing the delay of the random access. The first indication information for indicating the transmission parameters of the Msg3 in the embodiments of the present disclosure can be carried in the existing RAR message, DCI or MAC CE, and indicates the transmission parameters of Msg3 in a manner compatible with the existing signaling, thereby reducing the complexity of receiving the signaling by the terminal device and saving the overhead of network resources. The terminal device for implementing the method for information transmission provided by the embodiments of the present disclosure can be compatible with the original terminal device in a network system.

In order to realize the method for information transmission provided by the embodiments of the present disclosure, an embodiment of the present disclosure further provides a terminal device. An optional composition structure of the terminal device 400 is illustrated in FIG. 11, and the terminal device includes a processing unit 401.

The processing unit 401 is configured to determine transmission parameters of a message Msg3 according to first indication information, and the transmission parameters include at least one of a repeated transmission parameter or a frequency hopping manner of a physical uplink shared channel PUSCH in which the message Msg3 is carried.

In some embodiments, the repeated transmission parameter includes the number of time domain units for repeated transmission.

In some embodiments, the time domain unit includes any one of a frame, a subframe, a slot, a symbol or a symbol group.

In some embodiments, the first indication information indicates the repeated transmission parameter and a frequency hopping pattern corresponding to the frequency hopping manner.

In some embodiments, the frequency hopping pattern includes that a first-hop transmission in a first slot has the same frequency domain position as a second-hop transmission in a second slot.

Alternatively, the frequency hopping pattern includes that a first-hop transmission in a first slot has the same frequency domain position as a first-hop transmission in a second slot.

The second slot is a slot adjacent to the first slot, and the second slot is located previously the first slot, and each of the first slot and the second slot has two-hop transmissions.

In some embodiments, the frequency hopping pattern is determined by a frequency hopping indication field in a random access response (RAR) message.

In some embodiments, the first indication information indicates the repeated transmission parameter and whether to perform a frequency hopping transmission.

In some embodiments, whether to perform the frequency hopping transmission is determined by a frequency hopping indication field in a RAR message.

In some embodiments, the terminal device determines the frequency hopping manner in response to the first indication information indicating the frequency hopping transmission, and the frequency hopping manner includes intra-slot frequency hopping or inter-slot frequency hopping.

In some embodiments, the frequency hopping manner is determined by a second information field in the RAR message, and the second information field is different from the frequency hopping indication field.

Alternatively, the frequency hopping manner is determined by a MAC CE.

Alternatively, the frequency hopping manner is determined by DCI.

In some embodiments, the first indication information indicates the repeated transmission parameter and whether to perform an intra-slot frequency hopping.

In some embodiments, whether to perform the intra-slot frequency hopping is determined by a frequency hopping indication field in a RAR message.

In some embodiments, the terminal device determines whether to perform an inter-slot frequency hopping in response to the first indication information indicating not to perform the intra-slot frequency hopping.

In some embodiments, whether to perform the inter-slot frequency hopping is determined by a third information field in the RAR message, and the third information field is different from the frequency hopping indication field.

Alternatively, whether to perform the inter-slot frequency hopping is determined by a MAC CE.

Alternatively, whether to perform the inter-slot frequency hopping is determined by DCI.

In some embodiments, the repeated transmission parameter is determined by a fourth information field in a RAR message, and the fourth information field is different from an information field for indicating the frequency hopping manner.

Alternatively, the repeated transmission parameter is determined by a MAC CE.

Alternatively, the repeated transmission parameter is determined by DCI.

In some embodiments, the terminal device 400 may further include a receiving unit 402. The receiving unit 402 is configured to receive the first indication information.

In order to realize the method for information transmission provided by the embodiments of the present disclosure, an embodiment of the present disclosure further provides a network device. An optional composition structure of the network device 500 is illustrated in FIG. 12, and the network device includes a transmitting unit 501.

The transmitting unit 501 is configured to transmit first indication information. The first indication information indicates transmission parameters of a message Msg3, and the transmission parameters include at least one of a repeated transmission parameter or a frequency hopping manner of a physical uplink shared channel PUSCH in which the message Msg3 is carried.

In some embodiments, the repeated transmission parameter includes the number of time domain units for repeated transmission.

In some embodiments, the time domain unit includes any one of a frame, a subframe, a slot, a symbol or a symbol group.

In some embodiments, the first indication information indicates the repeated transmission parameter and a frequency hopping pattern corresponding to the frequency hopping manner.

In some embodiments, the frequency hopping pattern includes that a first-hop transmission in a first slot has the same frequency domain position as a second-hop transmission in a second slot.

Alternatively, the frequency hopping pattern includes that a first-hop transmission in a first slot has the same frequency domain position as a first-hop transmission in a second slot.

The second slot is a slot adjacent to the first slot, and the second slot is located previously the first slot, and each of the first slot and the second slot has two-hop transmissions.

In some embodiments, the frequency hopping pattern is determined by a frequency hopping indication field in a random access response (RAR) message.

In some embodiments, the first indication information indicates the repeated transmission parameter and whether to perform a frequency hopping transmission.

In some embodiments, whether to perform the frequency hopping transmission is determined by a frequency hopping indication field in a RAR message.

In some embodiments, in response to the first indication information indicating the frequency hopping transmission, the network device indicates the frequency hopping manner through a second information field in the RAR message; or indicates the frequency hopping manner through a medium access control (MAC) control unit (MAC CE); or indicates the frequency hopping manner through downlink control information (DCI).

The second information field is different from the frequency hopping indication field, and the frequency hopping manner includes intra-slot frequency hopping or inter-slot frequency hopping.

In some embodiments, the first indication information indicates the repeated transmission parameter and whether to perform an intra-slot frequency hopping.

In some embodiments, whether to perform the intra-slot frequency hopping is determined by a frequency hopping indication field in a RAR message.

In some embodiments, in response to the first indication information indicating not to perform the intra-slot frequency hopping, the network device indicates whether to perform the intra-slot frequency hopping through a third information field in the RAR message; or indicates whether to perform the intra-slot frequency hopping through a medium access control (MAC) control unit (MAC CE); or indicates whether to perform the intra-slot frequency hopping through downlink control information (DCI).

The third information field is different from the frequency hopping indication field.

In some embodiments, the repeated transmission parameter is determined by a fourth information field in a RAR message, and the fourth information field is different from an information field for indicating the frequency hopping manner.

Alternatively, the repeated transmission parameter is determined by a MAC CE.

Alternatively, the repeated transmission parameter is determined by DCI.

It should be noted that in the embodiments of the present disclosure, the function of the processing unit 401 may be implemented by a processor, and the function of the transmitting unit 501 may be implemented by a transmitter or a transceiver, and the function of the receiving unit 402 may be implemented by a receiver or a transceiver.

An embodiment of the present disclosure further provides a terminal device, including a processor and a memory for storing a computer program capable of running on the processor. The processor is configured to perform the operations of the above method for information transmission performed by the terminal device when running the computer programs.

An embodiment of the present disclosure further provides a network device including a processor and a memory for storing computer programs capable of running on the processor. The processor is configured to perform the operations of the above method for information transmission performed by the network device when running the computer programs.

An embodiment of the present disclosure further provides a chip including a processor. The processor is configured to call and run a computer program from a memory, o cause a device on which the chip is installed to perform the above method for information transmission performed by the terminal device.

An embodiment of the present disclosure further provides a chip including a processor. The processor is configured to call and run a computer program from a memory, to cause a device on which the chip is installed to perform the above method for information transmission performed by the network device.

An embodiment of the present disclosure further provides a storage medium having stored an executable program that, when executed by a processor, implements the method for information transmission performed by the terminal device.

An embodiment of the present disclosure further provides a storage medium having stored an executable program that, when executed by a processor, implements the method for information transmission performed by the network device.

An embodiment of the present disclosure further provides a computer program product including computer program instructions, and the computer program instructions cause a computer to perform the method for information transmission performed by the terminal device.

An embodiment of the present disclosure further provides a computer program product including computer program instructions, and the computer program instructions cause a computer to perform the above method for information transmission performed by the network device.

An embodiment of the present disclosure further provides a computer program causing a computer to perform the above method for information transmission performed by the terminal device.

An embodiment of the present disclosure further provides a computer program causing a computer to perform the above method for information transmission performed by the network device.

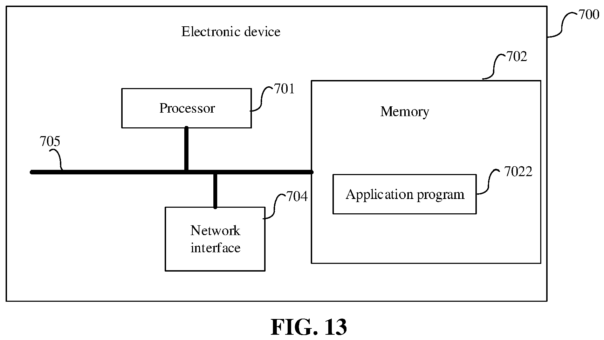

FIG. 13 is a schematic diagram of a hardware composition structure of an electronic device (a terminal device or a network device) provided by an embodiment of the present disclosure. The electronic device 700 includes at least one processor 701, a memory 702 and at least one network interface 704. The various components in the electronic device 700 are coupled together by a bus system 705. It can be understood that the bus system 705 is used to implement connection communications between these components. The bus system 705 includes, in addition to a data bus, a power bus, a control bus and a status signal bus. However, the various buses are designated as the bus system 705 in FIG. 13 for clarity.

It should be understood that the memory 702 may be a volatile memory or a non-volatile memory and may also include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), a magnetic random access memory (FRAM), a flash memory, a magnetic surface memory, an optical disk, or a compact disc read-only memory (CD-ROM). The magnetic surface memory may be a disk storage or a magnetic tape memory. The volatile memory may be a random access memory (RAM) which serves as an external cache. By way of an illustration, but not a limitation, many forms of RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), a direct rambus random access memory (DRRAM). The memory 702 described in the embodiments of the present disclosure is intended to include but not be limited to these and any other suitable types of memory.

The memory 702 in the embodiments of the present disclosure is used to store various types of data to support the operations of the electronic device 700. Examples of such data include any computer program for operation on the electronic device 700, such as an application program 7022. A program for implementing the method of the embodiments of the present disclosure may be included in the application program 7022.

The methods disclosed in the above embodiments of the present disclosure may be applied to or implemented by the processor 701. The processor 701 may be an integrated circuit chip having a signal processing capability. In an implementation, the operations of the method may be accomplished by an integrated logic circuitry of the hardware in the processor 701 or instructions in a form of software. The processor 701 may be a common processor, a digital signal processor (DSP) or other programmable logic devices, discrete gate or transistor logic devices, discrete hardware components or the like. The processor 701 may implement or perform the methods, operations and logic diagrams disclosed in the embodiments of the present disclosure. The common processor can be a microprocessor or any conventional processor. The operations of the method disclosed in the embodiments of the present disclosure can be implemented directly by the hardware decoding processor or a combination of the hardware and the software module in the decoding processor. The software module may be located in a storage medium in the memory 702, and the processor 701 reads information in the memory 702, to implement the operations of the method in conjunction with its hardware.

In an exemplary embodiment, the electronic device 700 may be implemented by one or more application specific integrated circuits (ASIC), a DSP, a programmable logic device (PLD), a complex programmable logic device (CPLD), an FPGA, a common processor, a controller, an MCU, an MPU, or other electronic components for performing the methods.

The present disclosure is described with reference to flowcharts and/or block diagrams of the methods, apparatus (systems) and computer program products according to the embodiments of the present disclosure. It should be understood that each flow and/or block in the flowcharts and/or the block diagrams, as well as the combinations of the flows and/or blocks in the flowcharts and/or the block diagrams, may be implemented by computer program instructions. These computer program instructions may be provided to a processor of a common computer, a special purpose computer, an embedded processor, or other programmable data processing device to generate a machine, such that the instructions executed by the processor of the computer or other programmable data processing device generate an apparatus for performing the functions specified in one or more flows of the flowcharts and/or one or more blocks of the block diagram.

These computer program instructions may also be stored in a computerreadable memory capable of directing a computer or other programmable data processing device to operate in a specific manner such that the instructions stored in the computerreadable memory produce an manufacture including instruction apparatus that performs the functions specified in one or more flows of the flowcharts and/or one or more blocks of the block diagrams.

These computer program instructions may also be loaded on a computer or other programmable data processing device such that a series of operations are executed on the computer or other programmable device to produce a computer-implemented processing, such that the instructions executed on the computer or other programmable device provide operations for implementing the functions specified in one or more flows of the flowcharts and/or one or more blocks of the block diagrams.

It should be understood that the terms "system" and "network" in the present disclosure are generally used interchangeably herein. In the present disclosure, the term "and/or" is merely used to describe an association relationship between the associated objects and represents that there may be three relationships, for example, A and/or B may represent that there are three situations: A exists alone, both A and B exist, and B exist alone. In addition, the character "/" in the present disclosure generally represents that the associated objects have an "or" relationship.

The foregoing are only preferred embodiments of the present disclosure, and are not intended to limit the scope of protection of the present disclosure. All modifications, equivalent replacements and improvements made within the spirit and principles of the present disclosure shall be included in the scope of protection of the present disclosure.

**Claims**

1. A method for information transmission, comprising:
   determining, by a terminal device according to first indication information, transmission parameters of a message Msg3, wherein the transmission parameters comprise at least one of a repeated transmission parameter or a frequency hopping manner of a physical uplink shared channel (PUSCH) in which the message Msg3 is carried.

2. The method of claim 1, wherein the repeated transmission parameter comprises a number of time domain units for repeated transmission.

3. The method of claim 2, wherein the time domain unit comprises any one of a frame, a subframe, a slot, a symbol or a symbol group.

4. The method of any one of claims 1 to 3, wherein the first indication information indicates the repeated transmission parameter and a frequency hopping pattern corresponding to the frequency hopping manner.

5. The method of claim 4, wherein the frequency hopping pattern comprises a first-hop transmission in a first slot having a same frequency domain position as a second-hop transmission in a second slot; or

the frequency hopping pattern comprises a first-hop transmission in a first slot having a same frequency domain position as a first-hop transmission in a second slot, and
wherein the second slot is adjacent to the first slot, and the second slot is located previously the first slot, and each of the first slot and the second slot has two-hop transmission.

6. The method of claim 4 or 5, wherein the frequency hopping pattern is determined by a frequency hopping indication field in a random access response (RAR) message.

7. The method of any one of claims 1 to 3, wherein the first indication information indicates the repeated transmission parameter and whether to perform frequency hopping transmission.

8. The method of claim 7, wherein whether to perform the frequency hopping transmission is determined by a frequency hopping indication field in a random access response (RAR) message.

9. The method of claim 7 or 8, wherein the terminal device determines a frequency hopping manner in response to the first indication information indicating to perform the frequency hopping transmission, and the frequency hopping manner comprises intra-slot frequency hopping or inter-slot frequency hopping.

10. The method of claim 9, wherein the frequency hopping manner is determined by a second information field in a random access response (RAR) message, and the second information field being different from the frequency hopping indication field; or

the frequency hopping manner is determined by a medium access control (MAC) control unit (MAC CE); or
the frequency hopping manner is determined by downlink control information (DCI).

11. The method of any one of claims 1 to 3, wherein the first indication information indicates the repeated transmission parameter and whether to perform intra-slot frequency hopping.

12. The method of claim 11, wherein whether to perform the intra-slot frequency hopping is determined by a frequency hopping indication field in a random access response (RAR) message.

13. The method of claim 11 or 12, wherein the terminal device determines whether to perform inter-slot frequency hopping in response to the first indication information indicating not to perform the intra-slot frequency hopping.

14. The method of claim 13, wherein whether to perform the inter-slot frequency hopping is determined by a third information field in a random access response (RAR) message, and the third information field being different from the frequency hopping indication field; or

whether to perform the inter-slot frequency hopping is determined by a medium access control (MAC) control unit (MAC CE); or
whether to perform the inter-slot frequency hopping is determined by downlink control information (DCI).

15. The method of any one of claims 1 to 14, wherein the repeated transmission parameter is determined by a fourth information field in a random access response (RAR) message, and the fourth information field being different from an information field for indicating the frequency hopping manner; or

the repeated transmission parameter is determined by a medium access control (MAC) control unit (MAC CE); or
the repeated transmission parameter is determined by downlink control information (DCI).

16. A method for information transmission, comprising:
transmitting, by a network device, first indication information for indicating transmission parameters of a message Msg3, wherein the transmission parameters comprise at least one of a repeated transmission parameter or a frequency hopping manner of a physical uplink shared channel (PUSCH) in which the message Msg3 is carried.

17. The method of claim 16, wherein the repeated transmission parameter comprises a number of time domain units for repeated transmission.

18. The method of claim 17, wherein the time domain unit comprises any one of a frame, a subframe, a slot, a symbol or a symbol group.

19. The method of any one of claims 16 to 18, wherein the first indication information indicates the repeated transmission parameter and a frequency hopping pattern corresponding to the frequency hopping manner.

20. The method of claim 19, wherein the frequency hopping pattern comprises a first-hop transmission in a first slot having a same frequency domain position as a second-hop transmission in a second slot; or

   the frequency hopping pattern comprises a first-hop transmission in a first slot having a same frequency domain position as a first-hop transmission in a second slot, and
   wherein the second slot is adjacent to the first slot, and the second slot is located previously the first slot, and each of the first slot and the second slot has two-hop transmission.

21. The method of claim 19 or 20, wherein the frequency hopping pattern is determined by a frequency hopping indication field in a random access response (RAR) message.

22. The method of any one of claims 16 to 18, wherein the first indication information indicates the repeated transmission parameter and whether to perform frequency hopping transmission.

23. The method of claim 22, wherein whether to perform the frequency hopping transmission is indicated by a frequency hopping indication field in a random access response (RAR) message.

24. The method of claim 22 or 23, wherein in response to the first indication information indicating to perform the frequency hopping transmission, the network device indicates the frequency hopping manner through a second information field in a random access response (RAR) message, or indicates the frequency hopping manner through a medium access control (MAC) control unit (MAC CE), or indicates the frequency hopping manner through downlink control information (DCI), and
   wherein the second information field is different from the frequency hopping indication field, and the frequency hopping manner comprises intra-slot frequency hopping or inter-slot frequency hopping.

25. The method of any one of claims 16 to 18, wherein the first indication information indicates the repeated transmission parameter and whether to perform intra-slot frequency hopping.

26. The method of claim 25, wherein whether to perform the intra-slot frequency hopping is determined by a frequency hopping indication field in a random access response (RAR) message.

27. The method of claim 25 or 26, wherein in response to the first indication information indicating not to perform the intra-slot frequency hopping, the network device indicates whether to perform inter-slot frequency hopping through a third information field in a random access response (RAR) message, or indicates whether to perform inter-slot frequency hopping through a medium access control (MAC) control unit (MAC CE), or indicates whether to perform the inter-slot frequency hopping through downlink control information (DCI), and
   wherein the third information field is different from the frequency hopping indication field.

28. The method of any one of claims 16 to 27, wherein the repeated transmission parameter is determined by a fourth information field in a random access response (RAR) message, and the fourth information field being different from an information field for indicating the frequency hopping manner; or

   the repeated transmission parameter is determined by a medium access control (MAC) control unit (MAC CE); or
   the repeated transmission parameter is determined by downlink control information (DCI).

29. A terminal device, comprising:
   a processing unit, configured to determine transmission parameters of a message Msg3 according to first indication information, wherein the transmission parameters comprise at least one of a repeated transmission parameter or a frequency hopping manner of a physical uplink shared channel (PUSCH) in which the message Msg3 is carried.

30. The terminal device of claim 29, wherein the repeated transmission parameter comprises a number of time domain units for repeated transmission.

31. The terminal device of claim 30, wherein the time domain unit comprises any one of a frame, a subframe, a slot, a symbol or a symbol group.

32. The terminal device of any one of claims 29 to 31, wherein the first indication information indicates the repeated transmission parameter and a frequency hopping pattern corresponding to the frequency hopping manner.

33. The terminal device of claim 32, wherein the frequency hopping pattern comprises a first-hop transmission in a first slot having a same frequency domain position as a second-hop transmission in a second slot; or

the frequency hopping pattern comprises a first-hop transmission in a first slot having a same frequency domain position as a first-hop transmission in a second slot, and
wherein the second slot is adjacent to the first slot, and the second slot is located previously the first slot, and each of the first slot and the second slot has two-hop transmission.

34. The terminal device of claim 32 or 33, wherein the frequency hopping pattern is determined by a frequency hopping indication field in a random access response (RAR) message.

35. The terminal device of any one of claims 29 to 31, wherein the first indication information indicates the repeated transmission parameter and whether to perform frequency hopping transmission.

36. The terminal device of claim 35, wherein whether to perform the frequency hopping transmission is determined by a frequency hopping indication field in a random access response (RAR) message.

37. The terminal device of claim 35 or 36, wherein the terminal device determines a frequency hopping manner in response to the first indication information indicating to perform the frequency hopping transmission, and the frequency hopping manner comprises intra-slot frequency hopping or inter-slot frequency hopping.

38. The terminal device of claim 37, wherein the frequency hopping manner is determined by a second information field in a random access response (RAR) message, and the second information field being different from the frequency hopping indication field; or

the frequency hopping manner is determined by a medium access control (MAC) control unit (MAC CE); or
the frequency hopping manner is determined by downlink control information (DCI).

39. The terminal device of any one of claims 29 to 31, wherein the first indication information indicates the repeated transmission parameter and whether to perform intra-slot frequency hopping.

40. The terminal device of claim 39, wherein whether to perform the intra-slot frequency hopping is determined by a frequency hopping indication field in a random access response (RAR) message .

41. The terminal device of claim 39 or 40, wherein the terminal device determines whether to perform inter-slot frequency hopping in response to the first indication information indicating not to perform the intra-slot frequency hopping.

42. The terminal device of claim 41, wherein whether to perform the inter-slot frequency hopping is determined by a third information field in a random access response (RAR) message, and the third information field being different from the frequency hopping indication field; or

whether to perform the inter-slot frequency hopping is determined by a medium access control (MAC) control unit (MAC CE); or
whether to perform the inter-slot frequency hopping is determined by downlink control information (DCI).

43. The terminal device of any one of claims 29 to 42, wherein the repeated transmission parameter is determined by a fourth information field in a random access response (RAR) message, and the fourth information field being different from an information field for indicating the frequency hopping manner; or

the repeated transmission parameter is determined by a medium access control (MAC) control unit (MAC CE); or
the repeated transmission parameter is determined by downlink control information (DCI).

**44.** A network device, comprising:

a transmitting unit, configured to transmit first indication information for indicating transmission parameters of a message Msg3, wherein the transmission parameters comprise at least one of a repeated transmission parameter or a frequency hopping manner of a physical uplink shared channel (PUSCH) in which the message Msg3 is carried.

**45.** The network device of claim 44, wherein the repeated transmission parameter comprises a number of time domain units for repeated transmission.

**46.** The network device of claim 45, wherein the time domain unit comprises any one of a frame, a subframe, a slot, a symbol or a symbol group.

**47.** The network device of any one of claim 44 to 46, wherein the first indication information indicates the repeated transmission parameter and a frequency hopping pattern corresponding to the frequency hopping manner.

**48.** The network device of claim 47, wherein the frequency hopping pattern comprises a first-hop transmission in a first slot having a same frequency domain position as a second-hop transmission in a second slot; or

the frequency hopping pattern comprises a first-hop transmission in a first slot having a same frequency domain position as a first-hop transmission in a second slot, and

wherein the second slot is adjacent to the first slot, and the second slot is located previously the first slot, and each of the first slot and the second slot has two-hop transmission.

**49.** The network device of claim 47 or 48, wherein the frequency hopping pattern is determined by a frequency hopping indication field in a random access response (RAR) message.

**50.** The network device of any one of claims 44 to 46, wherein the first indication information indicates the repeated transmission parameter and whether to perform frequency hopping transmission.

**51.** The network device of claim 50, wherein whether to perform the frequency hopping transmission is indicated by a frequency hopping indication field in a random access response (RAR) message.

**52.** The network device of claim 50 or 51, wherein in response to the first indication information indicating to perform the frequency hopping transmission, the network device indicates the frequency hopping manner through a second information field in a random access response (RAR) message, or indicates the frequency hopping manner through a medium access control (MAC) control unit (MAC CE), or indicates the frequency hopping manner through downlink control information (DCI), and

wherein the second information field is different from the frequency hopping indication field, and the frequency hopping manner comprises intra-slot frequency hopping or inter-slot frequency hopping.

**53.** The network device of any one of claims 44 to 46, wherein the first indication information indicates the repeated transmission parameter and whether to perform intra-slot frequency hopping.

**54.** The network device of claim 53, wherein whether to perform the intra-slot frequency hopping is determined by a frequency hopping indication field in a random access response (RAR) message .

**55.** The network device of claim 53 or 54, wherein in response to the first indication information indicating not to perform the intra-slot frequency hopping, the network device indicates whether to perform inter-slot frequency hopping through a third information field in a random access response (RAR) message, or indicates whether to perform inter-slot frequency hopping through a medium access control (MAC) control unit (MAC CE), or indicates whether to perform the inter-slot frequency hopping through downlink control information (DCI), and

wherein the third information field is different from the frequency hopping indication field.

**56.** The network device of any one of claims 44 to 46, wherein the repeated transmission parameter is determined by a fourth information field in a RAR message, and the fourth information field being different from an information field for indicating the frequency hopping manner; or

the repeated transmission parameter is determined by a medium access control (MAC) control unit (MAC CE); or the repeated transmission parameter is determined by downlink control information (DCI).

**57.** A terminal device comprising a processor and a memory for storing a computer program capable of running on the processor, wherein
the processor is configured to perform the operations of the method for information transmission of any one of claims 1 to 15 when running the computer program.

**58.** A network device comprising a processor and a memory for storing a computer program capable of running on the processor, wherein
the processor is configured to perform the operations of the method for information transmission of any one of claims 16 to 28 when running the computer program.

**59.** A storage medium having stored thereon an executable program that, when executed by a processor, implement the method for information transmission of any one of claims 1 to 15.

**60.** A storage medium having stored thereon an executable program that, when executed by a processor, implement the method for information transmission of any one of claims 16 to 28.

**61.** A computer program product comprising computer program instructions, wherein the computer program instructions cause a computer to perform the method for information transmission of any one of claims 1 to 15.

**62.** A computer program product comprising computer program instructions, wherein the computer program instructions cause a computer to perform the method information transmission of any one of claims 16 to 28.

**63.** A computer program causing a computer to perform the method for information transmission of any one of claims 1 to 15.

**64.** A computer program causing a computer to perform the method for information transmission of any one of claims 16 to 28.

**65.** A chip, comprising:
a processor, configured to call and run a computer program from a memory, to cause a device on which the chip is installed to perform the method for information transmission of any one of claims 1 to 15.

**66.** A chip, comprising:
a processor, configured to call and run a computer program from a memory, to cause a device on which the chip is installed to perform the method for information transmission of any one of claims 16 to 28.

**FIG. 1**

Data 1

Data 2

Frequency
hopping

Slot 0

Slot 1

Slot 2

Slot 3

⬚ Transmission symbol

**FIG. 2**

**100**

110

120                                   120

## FIG. 3

| A terminal device determines transmission parameters of a message Msg3 according to first indication information, and the transmission parameters includes at least one of a repeated transmission parameter or a frequency hopping manner of a physical uplink shared channel PUSCH in which the message Msg3 is carried | S201 |

## FIG. 4

| R | Time advance command |
|---|---|
| Time advance command | Uplink authorization |
| Uplink authorization | |
| Uplink authorization | |
| Uplink authorization | |
| Cell wireless network temporary identification | |
| Cell wireless network temporary identification | |
| Repeated indication | |

## FIG. 5

Repeated transmission 0 Repeated transmission 1 Repeated transmission 2 Repeated transmission 3

Slot 0 Slot 1 Slot 2 Slot 3

Frequency hopping

Transmission symbol

**FIG. 6**

Repeated transmission 0    Repeated transmission 1    Repeated transmission 2    Repeated transmission 3

Frequency
hopping

Slot 0    Slot 1    Slot 2    Slot 3

▨ Transmission symbol

**FIG. 7**

EP 4 280 789 A1

Repeated transmission 0    Repeated transmission 1    Repeated transmission 2    Repeated transmission 3

Frequency
hopping

Slot 0    Slot 1    Slot 2    Slot 3

▨ Transmission symbol

**FIG. 8**

A network device transmits first indication information for indicating transmission parameters of a message Msg3, and the transmission parameters includes at least one of a repeated transmission parameter or a frequency hopping manner of a physical uplink shared channel PUSCH in which the message Msg3 is carried

S301

**FIG. 9**

**FIG. 10**

Terminal device 400

Processing unit 401

Receiving unit 402

**FIG. 11**

Network device 500

Transmitting unit 501

**FIG. 12**

**FIG. 13**

## INTERNATIONAL SEARCH REPORT

| International application No. |
| --- |
| **PCT/CN2021/080309** |

**A.    CLASSIFICATION OF SUBJECT MATTER**

H04W 74/08(2009.01)i;  H04W 72/04(2009.01)i

According to International Patent Classification (IPC) or to both national classification and IPC

**B.      FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; CNABS; CNKI; VEN; WOTXT; EPTXT; USTXT; 3GPP: 随机接入, 消息二, 消息三, 参数, 承载, 物理上行共享信道, 重复传输, 覆盖增强, 跳频, 时域, 频域, 时隙, random access, Msg2, Msg3, parameter, bear, PUSCH, repetition retransmission, coverage enhancement, frequency hopping, time domain, frequency domain, slot time

**C.      DOCUMENTS CONSIDERED TO BE RELEVANT**

| Category* | Citation of document, with indication, where appropriate, of the relevant passages | Relevant to claim No. |
| --- | --- | --- |
| X | CN 111741517 A (HUAWEI TECHNOLOGIES CO., LTD.) 02 October 2020 (2020-10-02) description, pages 7-24 | 1-66 |
| A | CN 110612692 A (SHARP CORPORATION et al.) 24 December 2019 (2019-12-24) entire document | 1-66 |
| A | CN 110475374 A (HUAWEI TECHNOLOGIES CO., LTD.) 19 November 2019 (2019-11-19) entire document | 1-66 |
| A | CN 112040558 A (CHINA ACADEMY OF INFORMATION AND COMMUNICATIONS TECHNOLOGY) 04 December 2020 (2020-12-04) entire document | 1-66 |
| A | CN 105430750 A (SHARP CORP.) 23 March 2016 (2016-03-23) entire document | 1-66 |
| A | US 2021037517 A1 (QUALCOMM INCORPORATED) 04 February 2021 (2021-02-04) entire document | 1-66 |
| A | WO 2021030804 A1 (JEON HYOUNGSUK et al.) 18 February 2021 (2021-02-18) entire document | 1-66 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 November 2021** | **29 November 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/080309**

| Patent document cited in search report | | | Publication date (day/month/year) | Patent family member(s) | | | Publication date (day/month/year) |
|---|---|---|---|---|---|---|---|
| CN | 111741517 | A | 02 October 2020 | JP | 2018527811 | A | 20 September 2018 |
| | | | | JP | 6642842 | B2 | 12 February 2020 |
| | | | | US | 2020329492 | A1 | 15 October 2020 |
| | | | | US | 10993258 | B2 | 27 April 2021 |
| | | | | WO | 2017028051 | A1 | 23 February 2017 |
| | | | | EP | 3860298 | A1 | 04 August 2021 |
| | | | | US | 2021235490 | A1 | 29 July 2021 |
| | | | | PL | 3324696 | T3 | 28 June 2021 |
| | | | | CN | 109905910 | A | 18 June 2019 |
| | | | | EP | 3324696 | A1 | 23 May 2018 |
| | | | | EP | 3324696 | A4 | 25 July 2018 |
| | | | | EP | 3324696 | B1 | 06 January 2021 |
| | | | | US | 2018176947 | A1 | 21 June 2018 |
| | | | | US | 10873971 | B2 | 22 December 2020 |
| | | | | CN | 107006032 | A | 01 August 2017 |
| | | | | IN | 201837004650 | A | 30 March 2018 |
| | | | | VN | 57604 | A | 25 May 2018 |
| | | | | JP | 2020036343 | A | 05 March 2020 |
| | | | | CN | 107006032 | B | 08 May 2020 |
| | | | | CN | 109905910 | B | 10 November 2020 |
| CN | 110612692 | A | 24 December 2019 | BR | 112019022672 | A2 | 19 May 2020 |
| | | | | ZA | 201907933 | B | 28 April 2021 |
| | | | | CA | 3062282 | A1 | 08 November 2018 |
| | | | | EP | 3619870 | A1 | 11 March 2020 |
| | | | | PH | 12019502454 | A1 | 20 July 2020 |
| | | | | WO | 2018204344 | A1 | 08 November 2018 |
| | | | | KR | 20200004343 | A | 13 January 2020 |
| | | | | RU | 2019138708 | A | 04 June 2021 |
| | | | | RU | 2019138708 | A3 | 04 June 2021 |
| | | | | US | 2018324768 | A1 | 08 November 2018 |
| | | | | US | 10897753 | B2 | 19 January 2021 |
| CN | 110475374 | A | 19 November 2019 | None | | | |
| CN | 112040558 | A | 04 December 2020 | None | | | |
| CN | 105430750 | A | 23 March 2016 | WO | 2016045562 | A1 | 31 March 2016 |
| | | | | US | 2017280483 | A1 | 28 September 2017 |
| US | 2021037517 | A1 | 04 February 2021 | WO | 2021022301 | A1 | 04 February 2021 |
| WO | 2021030804 | A1 | 18 February 2021 | EP | 3895499 | A1 | 20 October 2021 |

Form PCT/ISA/210 (patent family annex) (January 2015)